(19) Europäisches Patentamt
European Patent Office
Office européen des brevets

(11) **EP 4 238 782 A1**

(12) # EUROPEAN PATENT APPLICATION

(43) Date of publication:
**06.09.2023 Bulletin 2023/36**

(21) Application number: **23154849.6**

(22) Date of filing: **03.02.2023**

(51) International Patent Classification (IPC):
**B60C 1/00** *(2006.01)*     **C08C 19/22** *(2006.01)*
**C08F 236/10** *(2006.01)*     **C08L 15/00** *(2006.01)*

(52) Cooperative Patent Classification (CPC):
(C-Sets available)
**C08L 15/00; B60C 1/0016; B60C 11/005;**
**C08C 19/22; C08F 236/10;** B60C 2011/0025;
B60C 2011/0033; B60C 2011/0355     (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **04.03.2022 JP 2022033543**

(71) Applicant: **Sumitomo Rubber Industries, Ltd.**
**Kobe-shi, Hyogo 651-0072 (JP)**

(72) Inventor: **TSUCHIDA, Tsuyoshi**
**Kobe-shi, 651-0072 (JP)**

(74) Representative: **TBK**
**Bavariaring 4-6**
**80336 München (DE)**

(54) **TIRE**

(57)     Provided is a tire having an excellent abrasion resistance under high loads. The present invention relates to a tire including a tread, the tread including biomass silica and having a difference ($\Delta G^*$) between a complex modulus of elasticity $G^*a$ (MPa) at 0.1% shear deformation (frequency 10 Hz) at 30°C and a complex modulus of elasticity $G^*b$ (MPa) at 20% shear deformation (frequency 10 Hz) at 30°C, the difference ($\Delta G^*$) satisfying the following relationship (1): (1) $|G^*a - G^*b| \leq 1.20$ MPa.

**EP 4 238 782 A1**

(52) Cooperative Patent Classification (CPC): (Cont.)

C-Sets
**C08F 236/10, C08F 2/06;**
**C08F 236/10, C08F 4/48;**
**C08L 15/00, C08L 9/06, C08L 9/00, C08L 91/08,**
**C08L 91/06, C08K 3/04, C08K 3/36, C08K 5/548,**
**C08K 5/09, C08K 3/22, C08K 5/18, C08K 5/3437,**
**C08K 5/47, C08K 5/31, C08K 3/06**

**Description**

TECHNICAL FIELD

The present invention relates to tires.

BACKGROUND ART

Tires have been proposed which include silica-containing rubber compositions and thus have various performances.

SUMMARY OF INVENTION

TECHNICAL PROBLEM

In recent years, tires having an improved abrasion resistance have been desired from the viewpoint of consideration for the environment. Also, there is a movement to encourage people to switch from conventional gasoline vehicles to electric vehicles. Electric vehicles are heavier than conventional gasoline vehicles by the weight of batteries and thus need tires having an improved abrasion resistance under high loads.

The present invention aims to solve the above problem and provide a tire having an excellent abrasion resistance under high loads.

SOLUTION TO PROBLEM

The present invention relates to a tire including a tread, the tread including biomass silica and having a difference ($\Delta G^*$) between a complex modulus of elasticity $G^*a$ (MPa) at 0.1% shear deformation (frequency 10 Hz) at 30°C and a complex modulus of elasticity $G^*b$ (MPa) at 20% shear deformation (frequency 10 Hz) at 30°C, the difference ($\Delta G^*$) satisfying the following relationship (1):

$$(1) \quad |G^*a - G^*b| \leq 1.20 \text{ MPa}.$$

ADVANTAGEOUS EFFECT OF THE INVENTION

The tire of the present invention including a tread that contains biomass silica and satisfies the relationship (1) can have an excellent abrasion resistance.

BRIEF DESCRIPTION OF DRAWINGS

FIG. 1 is a cross-sectional view illustrating a part of a pneumatic tire.
FIG. 2 is an enlarged cross-sectional view illustrating the vicinity of a tread 4 of a tire 2 of FIG. 1.

DESCRIPTION OF EMBODIMENTS

The present invention relates to a tire including a tread that contains biomass silica and satisfies the relationship (1).

The reason for the above advantageous effect is not exactly clear, but is believed to be due to the following mechanism.

Compared to silica made from water glass or the like, biomass-based silica made from rice husks or the like tends to have a higher density of silanol groups on the silica surface and a higher self-cohesive force. Thus, when biomass silica is used, it does not disperse well, which may lead to the formation of partial fracture nuclei and the like, and a decrease in abrasion resistance.

The present invention provides a rubber composition containing biomass silica and having a small difference between the elastic modulus at large deformation and the elastic modulus at small deformation (relationship (1)) at room temperature. A rubber composition having a sufficiently low elastic modulus at small deformation is likely to conform to minute irregularities on the road surface and reduces slipperiness on the road surface. A rubber composition having a higher elastic modulus at large deformation can obtain sufficient stress against the deformation that occurs between the road surface and the rubber composition pressed with a strong force against the road surface. Such a rubber composition is less likely to be broken by the road surface. Thus, the abrasion can be reduced, and even a rubber composition containing biomass silica can have good abrasion resistance. When the rubber composition also satisfies the relationship (1), silica better disperses therein, preventing generation of large agglomerates that may form fracture nuclei. Thus, the abrasion resistance is improved.

In addition, biomass silica made from rice husks and the like has many silanol groups and binds to polymers at many points. Dispersing better such silica improves the reinforcement, improving the abrasion resistance under high loads.

Therefore, in the present invention, the abrasion resistance under high loads is considered to be improved.

Thus, when the tire includes a tread having a difference ($\Delta G^*$) between a complex modulus of elasticity $G^*a$ (MPa) at 0.1% shear deformation (frequency 10 Hz) at 30°C and a complex modulus of elasticity $G^*b$ (MPa) at 20% shear deformation (frequency 10 Hz) at 30°C, the difference ($\Delta G^*$) satisfying the following relationship (1): (1) $|G^*a - G^*b| \leq 1.20$ MPa, the tire solves the problem (purpose) of improving abrasion resistance. In other words, the parameter of "$\lceil |G^*a - G^*b| \leq 1.20$ MPa" does not define the problem (purpose), and the problem herein is to improve abrasion resistance. In order to provide a solution to this problem, the tire has been formulated to satisfy the parameter.

The tread included in the tire of the present invention has a difference ($\Delta G^*$) between a complex modulus of elasticity $G^*a$ (MPa) at 0.1% shear deformation (frequency 10 Hz) at 30°C and a complex modulus of elasticity $G^*b$ (MPa) at 20% shear deformation (frequency 10 Hz) at 30°C, the difference ($\Delta G^*$) satisfying the following relationship (1):

$$(1) \quad |G^*a - G^*b| \leq 1.20 \text{ MPa.}$$

The value of $\Delta G^*$ (= $|G^*a - G^*b|$) is preferably 1.13 MPa or less, more preferably 1.00 MPa or less, still more preferably 0.61 MPa or less, particularly preferably 0.54 MPa or less. When the tread has a smaller value of $\Delta G^*$, the dispersibility of silica in the tread is improved and the tread easily deforms against the road surface during running, whereby the abrasion is reduced. Thus, the smaller the value of $\Delta G^*$, the better. The lower limit of the value of $\Delta G^*$ is not limited. For example, the value of $\Delta G^*$ is preferably 0.01 MPa or more, more preferably 0.05 MPa or more, still more preferably 0.10 MPa or more.

The value of $G^*a$ (the complex modulus of elasticity of the tread at 0.1% shear deformation (frequency 10 Hz) at 30°C) is preferably 3.00 MPa or less, more preferably 2.73 MPa or less, still more preferably 2.60 MPa or less, particularly preferably 2.11 MPa or less, most preferably 2.04 MPa or less. The lower limit of the value of $G^*a$ is preferably 1.00 MPa or more, more preferably 1.20 MPa or more, still more preferably 1.40 MPa or more, particularly preferably 1.50 MPa or more, but is not limited thereto. When the value of $G^*a$ is within the range indicated above, the advantageous effect tends to be suitably achieved.

The value of $G^*b$ (the complex modulus of elasticity of the tread at 20% shear deformation (frequency 10 Hz) at 30°C) is preferably 2.00 MPa or less, more preferably 1.80 MPa or less, still more preferably 1.60 MPa or less, particularly preferably 1.50 MPa or less. The lower limit of the value of $G^*b$ is preferably 0.50 MPa or more, more preferably 0.80 MPa or more, still more preferably 1.00 MPa or more, but is not limited thereto. When the value of $G^*b$ is within the range indicated above, the advantageous effect tends to be suitably achieved.

Herein, the $G^*$ of the tread refers to the $G^*$ of the tread of a molded tire and corresponds to the elastic modulus after vulcanization.

Herein, the complex modulus of elasticity $G^*$ refers to the complex modulus of elasticity in torsional shear measured with a rheometer ARES available from TA Instruments.

Specifically, the complex modulus of elasticity $G^*$ refers to the $G^*$ measured by the method described in Examples. A measurement sample is taken in the form of a disk having a diameter of 10 mm and a thickness of 2 mm from the tread of the produced tire, with the thickness direction corresponding to the tire radial direction.

The value of $G^*a$ (the complex modulus of elasticity of the tread at 0.1% shear deformation (frequency 10 Hz) at 30°C) can be controlled depending on the materials to be used, such as rubber components, fillers, silane coupling agents, and oils.

For example, the value of $G^*a$ tends to be decreased by using lower-molecular-weight polymers, silica-modified polymers, or larger-particle-size fillers, or by low-density filling with fillers.

The value of $G^*b$ (the complex modulus of elasticity of the tread at 20% shear deformation (frequency 10 Hz) at 30°C) can be controlled depending on the materials to be used, such as rubber components, fillers, silane coupling agents, and oils.

For example, the value of $G^*b$ tends to be decreased by using lower-molecular-weight polymers, silica-modified polymers, or larger-particle-size fillers, or by low-density filling with fillers.

The value of $\Delta G^*$ (= $|G^*a - G^*b|$) can be reduced by various methods capable of improving the dispersibility of biomass silica.

As described above, the value of G*a and the value of G*b generally tend to be close to each other by changing the materials to be compounded. The value of ΔG* can be adjusted according to kneading or the like.

For example, the value of ΔG* can be reduced by a method of adding the entire amount of silica for the tread at one time into a kneader (the addition at one time can impart high shear and increase the dispersibility of the silica), a method of kneading at least a portion of guanidine vulcanization accelerators during base kneading (the guanidine vulcanization accelerators make the pH of the system basic, whereby the silanization is promoted and the dispersibility of silica is improved), or a method of using modified rubbers.

<Tread rubber composition>

The tread includes a tread rubber composition.

The rubber components usable in the tread rubber composition contribute to cross-linking and generally correspond to polymers having a weight average molecular weight (Mw) of 10,000 or more. The rubber components are solid at room temperature (25°C).

The weight average molecular weight of the rubber components is preferably 50,000 or more, more preferably 150,000 or more, still more preferably 200,000 or more, but is preferably 2,000,000 or less, more preferably 1,500,000 or less, still more preferably 1,000,000 or less. When the weight average molecular weight is within the range indicated above, the advantageous effect tends to be better achieved.

Herein, the weight average molecular weight (Mw) can be determined with a gel permeation chromatograph (GPC) (GPC-8000 series available from Tosoh Corporation, detector: differential refractometer, column: TSKGEL SUPERMULTIPORE HZ-M available from Tosoh Corporation). The resulting values are calibrated with polystyrene standards.

For example, the rubber components usable include diene rubbers. Examples of the diene rubbers include isoprene-based rubbers, polybutadiene rubbers (BR), styrene-butadiene rubbers (SBR), styrene-isoprene-butadiene rubbers (SIBR), ethylene-propylene-diene rubbers (EPDM), chloroprene rubbers (CR), and acrylonitrile-butadiene rubbers (NBR). Other examples include butyl-based rubbers and fluororubbers. These may be used alone or in combination of two or more. To better achieve the advantageous effect, preferably, at least one of isoprene-based rubbers, BR, or SBR is used, more preferably, at least one of BR or SBR is used, and still more preferably, at least two of BR and SBR are used. These rubber components may be extended rubbers that have been previously extended with an oil, a resin component, a liquid rubber component, or the like.

The diene rubbers may be either unmodified or modified diene rubbers.

The modified diene rubbers may be any diene rubber having a functional group interactive with fillers such as silica. Examples include a chain end-modified diene rubber obtained by modifying at least one chain end of a diene rubber with a compound (modifier) having the functional group (i.e., a chain end-modified diene rubber terminated with the functional group); a backbone-modified diene rubber having the functional group in the backbone; a backbone- and chain end-modified diene rubber having the functional group in both the backbone and chain end (e.g., a backbone- and chain end-modified diene rubber in which the backbone has the functional group and at least one chain end is modified with the modifier); and a chain end-modified diene rubber into which a hydroxy or epoxy group has been introduced by modification (coupling) with a polyfunctional compound having two or more epoxy groups in the molecule.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may be substituted. Preferred among these are amino (preferably amino whose hydrogen atom is replaced with a C1-C6 alkyl group), alkoxy (preferably C1-C6 alkoxy), and alkoxysilyl (preferably C1-C6 alkoxysilyl) groups.

Examples of the isoprene-based rubbers include natural rubbers (NR), polyisoprene rubbers (IR), refined NR, modified NR, and modified IR. Examples of the NR include those commonly used in the rubber industry such as SIR20, RSS#3, and TSR20. Any IR may be used, and examples include those commonly used in the rubber industry such as IR2200. Examples of the refined NR include deproteinized natural rubbers (DPNR) and highly purified natural rubbers (UPNR). Examples of the modified NR include epoxidized natural rubbers (ENR), hydrogenated natural rubbers (HNR), and grafted natural rubbers. Examples of the modified IR include epoxidized polyisoprene rubbers, hydrogenated polyisoprene rubbers, and grafted polyisoprene rubbers. These may be used alone or in combination of two or more.

When the tread rubber composition contains isoprene-based rubbers, the amount of isoprene-based rubbers based on 100% by mass of the rubber component content is preferably 5% by mass or more, more preferably 10% by mass or more, and preferably 30% by mass or less, more preferably 20% by mass or less. When the amount of isoprene-based rubbers is within the range indicated above, the advantageous effect tends to be better achieved.

Any BR may be used, such as high-cis BR having high cis content, BR containing syndiotactic polybutadiene crystals, or BR synthesized using rare earth catalysts (rare earth-catalyzed BR). These may be used alone or in combination of two or more. In particular, the BR preferably includes high-cis BR having a cis content of 90% by mass or more. The cis content is more preferably 95% by mass or more. Here, the cis content can be measured by infrared absorption spectrometry.

The BR may be either unmodified or modified BR. Examples of the modified BR include those into which functional groups as listed for the modified diene rubbers are introduced. The BR usable may be hydrogenated butadiene rubbers.

The BR may be commercially available from Ube Industries, Ltd., JSR Corporation, Asahi Kasei Corporation, Zeon Corporation, etc.

When the tread rubber composition contains BR, the amount of BR based on 100% by mass of the rubber component content is preferably 5% by mass or more, more preferably 10% by mass or more, still more preferably 15% by mass or more. The upper limit of the amount of BR is preferably 50% by mass or less, more preferably 30% by mass or less, still more preferably 20% by mass or less. When the amount of BR is within the range indicated above, the advantageous effect tends to be better achieved.

Any SBR may be used, such as emulsion-polymerized styrene-butadiene rubbers (E-SBR) or solution-polymerized styrene-butadiene rubbers (S-SBR). These may be used alone or in combination of two or more.

The SBR preferably has a styrene content of 5% by mass or more, more preferably 20% by mass or more, still more preferably 25% by mass or more, further preferably 27.5% by mass or more. The styrene content is preferably 45% by mass or less, more preferably 40% by mass or less, still more preferably 35% by mass or less. When the styrene content is within the range indicated above, the external force is likely to be reduced at the domains in the rubber composition formed by the styrene portions, and the abrasion resistance can be easily improved.

Herein, the styrene content can be determined by $^1$H-NMR analysis.

The SBR preferably has a vinyl bond content of 3% by mass or more, more preferably 5% by mass or more, still more preferably 7% by mass or more. The vinyl bond content is preferably 59% by mass or less, more preferably 50% by mass or less, still more preferably 45% by mass or less, further preferably 25% by mass or less, even further preferably 15% by mass or less, still further preferably 13% by mass or less. When the vinyl bond content is within the range indicated above, the steering stability during high-speed running tends to be improved.

Herein, the vinyl bond content (1,2-bond butadiene unit content) can be determined by infrared absorption spectrometry.

The SBR may be either unmodified or modified SBR. Examples of the modified SBR include those into which functional groups as listed for the modified diene rubbers are introduced. The SBR usable may also be hydrogenated styrene-butadiene rubbers.

SBR products manufactured or sold by Sumitomo Chemical Co., Ltd., JSR Corporation, Asahi Kasei Corporation, Zeon Corporation, etc., may be used as the SBR.

When the tread rubber composition contains SBR, the amount of SBR based on 100% by mass of the rubber component content is preferably 50% by mass or more, more preferably 70% by mass or more, still more preferably 80% by mass or more, particularly preferably 85% by mass or more. The upper limit of the amount of SBR is preferably 95% by mass or less, more preferably 90% by mass or less. When the amount of SBR is within the range indicated above, the advantageous effect tends to be better achieved.

The tread rubber composition contains biomass silica.

Examples of biomass silica include silica derived from silicon-containing plants (also called rice husk silica). Examples of silicon-containing plants include rice husks. Examples of silica derived from silicon-containing plants include purified ash produced by combustion of rice husks. Rice husk silica is an amorphous porous material having plant structures. Examples of biomass silica include those described in JP 2021-518328 A.

The biomass silica preferably has a nitrogen adsorption specific surface area ($N_2SA$) of 50 $m^2/g$ or more, more preferably 100 $m^2/g$ or more, still more preferably 150 $m^2/g$ or more, particularly preferably 154 $m^2/g$ or more. The upper limit of the $N_2SA$ is preferably 250 $m^2/g$ or less, more preferably 200 $m^2/g$ or less, still more preferably 180 $m^2/g$ or less. When the $N_2SA$ is within the range indicated above, the advantageous effect tends to be better achieved.

Herein, the $N_2SA$ of the silica is measured by a BET method in accordance with ASTM D3037-93.

The biomass silica preferably has a cetyltrimethylammonium bromide (CTAB) specific surface area of 50 $m^2/g$ or more, more preferably 100 $m^2/g$ or more, still more preferably 145 $m^2/g$ or more, particularly preferably 152 $m^2/g$ or more. The upper limit of the CTAB specific surface area is preferably 250 $m^2/g$ or less, more preferably 200 $m^2/g$ or less, still more preferably 180 $m^2/g$ or less. When the CTAB specific surface area is within the range indicated above, the advantageous effect tends to be better achieved.

Herein, the CTAB specific surface area of silica is measured in accordance with JIS K 6217-3.

The amount of biomass silica in the tread rubber composition per 100 parts by mass of the rubber component content is preferably 5 parts by mass or more, more preferably 40 parts by mass or more, still more preferably 60 parts by mass or more, particularly preferably 80 parts by mass or more. The upper limit of the amount of biomass silica is preferably 160 parts by mass or less, more preferably 130 parts by mass or less, still more preferably 100 parts by mass or less. When the amount of biomass silica is within the range indicated above, the advantageous effect tends to be better achieved.

The tread rubber composition may contain silica other than biomass silica (hereinafter also referred to as "different silica").

Examples of the different silica include dry silica (anhydrous silica) and wet silica (hydrous silica). Wet silica is preferred among these because it contains a large number of silanol groups. Usable commercial products are available from Evonik Degussa, Rhodia, Tosoh Silica Corporation, Solvay Japan, Tokuyama Corporation, etc. These may be used alone or in combination of two or more.

The different silica preferably has a nitrogen adsorption specific surface area ($N_2SA$) of 50 $m^2$/g or more, more preferably 100 $m^2$/g or more, still more preferably 150 $m^2$/g or more, particularly preferably 180 $m^2$/g or more, most preferably 190 $m^2$/g or more. The upper limit of the $N_2SA$ of the different silica is not limited but is preferably 350 $m^2$/g or less, more preferably 300 $m^2$/g or less, still more preferably 250 $m^2$/g or less. When the $N_2SA$ is within the range indicated above, the advantageous effect tends to be better achieved.

Here, the $N_2SA$ of the silica is measured by a BET method in accordance with ASTM D3037-93.

The tread rubber composition preferably has a total silica content (the total amount of biomass silica and the different silica) of 5 parts by mass or more, more preferably 40 parts by mass or more, still more preferably 60 parts by mass or more, particularly preferably 80 parts by mass or more per 100 parts by mass of the rubber component content. The upper limit of the total silica content is preferably 160 parts by mass or less, more preferably 130 parts by mass or less, still more preferably 100 parts by mass or less. When the total silica content is within the range indicated above, the advantageous effect tends to be better achieved.

The percentage of biomass silica based on 100% by mass of the silica content of the tread rubber composition is preferably 60% by mass or more, more preferably 80% by mass or more, still more preferably 90% by mass or more, particularly preferably 100% by mass or more. When the percentage is within the range indicated above, the advantageous effect tends to be better achieved.

The tread rubber composition preferably further contains a silane coupling agent.

Any silane coupling agent may be used, including those known in the rubber field. Examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chlorosilane coupling agents such as 3-chloropropyltrimethoxysilane and 3-chloropropyltriethoxysilane. Usable commercial products are available from Evonik Degussa, Momentive, Shin-Etsu Silicone, Tokyo Chemical Industry Co., Ltd., AZmax.Co., Dow Corning Toray Co., Ltd., etc. These may be used alone or in combination of two or more.

The amount of silane coupling agents in the tread rubber composition per 100 parts by mass of the silica content (100 parts by mass of the sum of biomass silica and the different silica) is preferably 0.1 parts by mass or more, more preferably 3 parts by mass or more, still more preferably 5 parts by mass or more, particularly preferably 7 parts by mass or more. The upper limit of the amount of silane coupling agents is preferably 50 parts by mass or less, more preferably 20 parts by mass or less, still more preferably 15 parts by mass or less, particularly preferably 10 parts by mass or less. When the amount of silane coupling agents is within the range indicated above, the advantageous effect tends to be better achieved.

The tread rubber composition may contain fillers in addition to silica (biomass silica and the different silica).

The total amount of fillers (the total amount of fillers including biomass silica, the different silica, and carbon black) in the tread rubber composition per 100 parts by mass of the rubber component content is preferably 10 parts by mass or more, more preferably 45 parts by mass or more, still more preferably 65 parts by mass or more, particularly preferably 85 parts by mass or more. The upper limit of the total amount of fillers is preferably 165 parts by mass or less, more preferably 135 parts by mass or less, still more preferably 105 parts by mass or less.

When the total amount of fillers is within the range indicated above, the advantageous effect tends to be better achieved.

In addition to silica, any filler may be used, including materials known in the rubber field. Examples include inorganic fillers such as carbon black, calcium carbonate, talc, alumina, clay, aluminum hydroxide, aluminum oxide, and mica; difficult-to-disperse fillers; and bio char. Preferred among these are carbon-derived fillers (carbon-containing fillers) such as carbon black.

Any carbon black may be used in the tread rubber composition, and examples include N134, N110, N220, N234, N219, N339, N330, N326, N351, N550, and N762. Usable commercial products are available from Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon, etc. These may be used alone or in combination of two or more.

The carbon black preferably has a nitrogen adsorption specific surface area ($N_2SA$) of 30 $m^2$/g or more, more preferably 50 $m^2$/g or more, still more preferably 70 $m^2$/g or more. The $N_2SA$ is also preferably 200 $m^2$/g or less, more preferably 150 $m^2$/g or less, sill more preferably 130 $m^2$/g or less, further preferably 120 $m^2$/g or less, particularly preferably 114 $m^2$/g or less. When the $N_2SA$ is within the range indicated above, the advantageous effect tends to be better achieved. The $N_2SA$ of the carbon black is determined according to JIS K 6217-2:2001.

The amount of the carbon black in the tread rubber composition is preferably 1 part by mass or more, more preferably 3 parts by mass or more per 100 parts by mass of the rubber component content. The upper limit of the amount of the carbon black is preferably 50 parts by mass or less, more preferably 20 parts by mass or less, still more preferably 9 parts by mass or less, particularly preferably 5 parts by mass or less. When the amount of the carbon black is within the range indicated above, the advantageous effect tends to be better achieved.

Examples of difficult-to-disperse fillers include microfibrillated plant fibers, short fibrous cellulose, and gel compounds. Microfibrillated plant fibers are preferred among these.

For obtaining good reinforcement, cellulose microfibrils are preferred as the microfibrillated plant fibers. Any cellulose microfibril derived from naturally-occurring materials may be used. Examples include those derived from: resource biomass such as fruits, grains, and root vegetables; wood, bamboo, hemp, jute, and kenaf, and pulp, paper, or cloth produced therefrom; waste biomass such as agricultural waste, food waste, and sewage sludge; unused biomass such as rice straw, wheat straw, and thinnings; and celluloses produced by ascidians, acetic acid bacteria, or other organisms. These microfibrillated plant fibers may be used alone, or two or more of these may be used in combination.

Herein, the term "cellulose microfibrils" typically refers to cellulose fibers having an average fiber diameter of not more than 10 $\mu$m, more typically cellulose fibers having a microstructure with an average fiber diameter of not more than 500 nm formed by aggregation of cellulose molecules. For example, typical cellulose microfibrils may be formed as aggregates of cellulose fibers having an average fiber diameter as indicated above.

When the tread rubber composition contains difficult-to-disperse fillers, the amount of difficult-to-disperse fillers based on 100% by mass of the rubber component content is preferably 1 part by mass or more, more preferably 3 parts by mass or more, still more preferably 5 parts by mass. The upper limit of the amount of difficult-to-disperse fillers is preferably 50 parts by mass or less, more preferably 30 parts by mass or less, still more preferably 20 parts by mass or less, particularly preferably 10 parts by mass or less. When the amount of difficult-to-disperse fillers is within the range indicated above, the advantageous effect tends to be better achieved.

The tread rubber composition may contain plasticizers.

The term "plasticizers" refers to materials which can impart plasticity to rubber components, and examples include liquid plasticizers (plasticizers that are liquid at room temperature (25°C)) and resins (resins that are solid at room temperature (25°C)). When the rubber components include extended rubber as described above, the extending components in the extended rubber are included in the plasticizers.

The amount of plasticizers (the total amount of plasticizers) in the tread rubber composition per 100 parts by mass of the rubber component content is preferably 1 part by mass or more, more preferably 3 parts by mass or more. The upper limit of the amount of plasticizers is preferably 20 parts by mass or less, more preferably 10 parts by mass or less, still more preferably 5 parts by mass or less. When the amount of plasticizers is within the range indicated above, the advantageous effect tends to be better achieved.

Any liquid plasticizer (plasticizer that is liquid at room temperature (25°C)) may be used in the tread rubber composition. Examples include oils and liquid polymers (e.g., liquid resins, liquid diene polymers). Oils are desirable among these. These may be used alone or in combination of two or more.

The amount of liquid plasticizers in the tread rubber composition per 100 parts by mass of the rubber component content is preferably 1 part by mass or more, more preferably 3 parts by mass or more. The upper limit of the amount of liquid plasticizers is preferably 20 parts by mass or less, more preferably 10 parts by mass or less, still more preferably 5 parts by mass or less. When the amount of liquid plasticizers is within the range indicated above, the advantageous effect tends to be better achieved.

The amount of oils is also preferably within the range as indicated above.

Examples of oils include process oils, plant oils, and mixtures thereof. Examples of the process oils include paraffinic process oils such as mild extracts solvated (MES), distillate aromatic extracts (DAE), treated distillate aromatic extracts (TDAE), treated residual aromatic extracts (TRAE), and residual aromatic extracts (RAE); aromatic process oils; and naphthenic process oils. Examples of plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Usable commercial products are available from Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., The Nisshin Oillio Group, etc. Process oils such as paraffinic process oils, aromatic process oils, and naphthenic process oils, and plant oils are preferred among these. Lubrication oils after being used in rubber mixers or engines, or refined waste cooking oils after being used in kitchens may be appropriately used as the oils.

Examples of the liquid resins include terpene resins (including terpene phenol resins and aromatic modified terpene resins), rosin resins, styrene resins, C5 resins, C9 resins, C5/C9 resins, dicyclopentadiene (DCPD) resins, coumarone-indene resins (including resins based on coumarone or indene alone), phenol resins, olefin resins, polyurethane resins, and acrylic resins. Hydrogenated products of these are also usable.

Examples of liquid diene polymers include liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), liquid styrene-isoprene-styrene block copolymers (liquid SIS block polymers), liquid farnesene polymers, and liquid farnesene-butadiene copolymers, all of which are liquid at room temperature (25°C). These polymers may be modified at the chain end or backbone with a polar group. Hydrogenated products of these polymers are also usable.

Examples of the resins (resins that are solid at room temperature (25°C)) which may be used in the tread rubber composition include aromatic vinyl polymers, coumarone-indene resins, coumarone resins, indene resins, phenol resins, rosin resins, petroleum resins, terpene resins, and acrylic resins, all of which are solid at room temperature (25°C). The resins may be hydrogenated. These may be used alone or in combination of two or more. Preferred among these are aromatic vinyl polymers, petroleum resins, and terpene resins.

When the tread rubber composition contains any of the resins, the amount of resins per 100 parts by mass of the rubber component content is preferably 1 part by mass or more, more preferably 3 parts by mass or more. The amount of resins is preferably 20 parts by mass or less, more preferably 10 parts by mass or less, still more preferably 5 parts by mass or less. When the amount of resins is within the range indicated above, the advantageous effect tends to be better achieved.

The resins preferably have a softening point of 60°C or higher, more preferably 70°C or higher, still more preferably 80°C or higher. The upper limit of the softening point is preferably 160°C or lower, more preferably 130°C or lower, still more preferably 115°C or lower. When the softening point is within the range indicated above, the steering stability during high-speed running tends to be improved.

The softening point of the resins is determined in accordance with JIS K 6220-1:2001 using a ring and ball softening point measuring apparatus and defined as the temperature at which the ball drops down. Moreover, the softening point of the resins is usually higher by about $50°C \pm 5°C$ than the glass transition temperature of the resins.

The aromatic vinyl polymers refer to polymers containing aromatic vinyl monomers as structural units. Examples include resins produced by polymerizing $\alpha$-methylstyrene and/or styrene. Specific examples include styrene homopolymers (styrene resins), $\alpha$-methylstyrene homopolymers (a-methylstyrene resins), copolymers of $\alpha$-methylstyrene and styrene, and copolymers of styrene and other monomers.

The coumarone-indene resins refer to resins containing coumarone and indene as the main monomer components forming the skeleton (backbone) of the resins. Examples of monomer components which may be contained in the skeleton in addition to coumarone and indene include styrene, $\alpha$-methylstyrene, methylindene, and vinyltoluene.

The coumarone resins refer to resins containing coumarone as the main monomer component forming the skeleton (backbone) of the resins.

The indene resins refer to resins containing indene as the main monomer component forming the skeleton (backbone) of the resins.

Examples of the phenol resins include known polymers produced by reaction of phenol with aldehydes such as formaldehyde, acetaldehyde, or furfural using acid or alkali catalysts. Preferred among these are those produced by reaction using acid catalysts (e.g., novolac-type phenol resins).

Examples of the rosin resins include rosin-based resins typified by natural rosins, polymerized rosins, modified rosins, and esterified compounds thereof, and hydrogenated products thereof.

Examples of the petroleum resins include C5 resins, C9 resins, C5/C9 resins, and dicyclopentadiene (DCPD) resins, and hydrogenated products thereof. DCPD resins or hydrogenated DCPD resins are preferred among these.

The terpene resins refer to polymers containing terpenes as structural units. Examples include polyterpene resins produced by polymerizing terpene compounds, and aromatic modified terpene resins produced by polymerizing terpene compounds and aromatic compounds. Hydrogenated products of these resins are also usable.

The polyterpene resins refer to resins produced by polymerizing terpene compounds. The terpene compounds refer to hydrocarbons having a composition represented by $(C_5H_8)_n$ or oxygen-containing derivatives thereof, each of which has a terpene backbone and is classified as a monoterpene ($C_{10}H_{16}$), sesquiterpene ($C_{15}H_{24}$), diterpene ($C_{20}H_{32}$), or other terpenes. Examples of the terpene compounds include $\alpha$-pinene, $\beta$-pinene, dipentene, limonene, myrcene, alloocimene, ocimene, $\alpha$-phellandrene, $\alpha$-terpinene, $\gamma$-terpinene, terpinolene, 1,8-cineole, 1,4-cineole, $\alpha$-terpineol, $\beta$-

terpineol, and γ-terpineol.

Examples of the polyterpene resins include resins made from the above-mentioned terpene compounds, such as pinene resins, limonene resins, dipentene resins, and pinene-limonene resins. Pinene resins are preferred among these. Pinene resins, which usually contain two isomers, α-pinene and β-pinene, are classified as β-pinene resins mainly containing β-pinene and α-pinene resins mainly containing α-pinene, depending on the proportions of the components in the resins.

Examples of the aromatic modified terpene resins include terpene-phenol resins made from the above-mentioned terpene compounds and phenolic compounds, and terpene-styrene resins made from the above-mentioned terpene compounds and styrene compounds. Terpene-phenol-styrene resins made from the terpene compounds, phenolic compounds, and styrene compounds are also usable. Here, examples of the phenolic compounds include phenol, bisphenol A, cresol, and xylenol. Examples of the styrene compounds include styrene and α-methylstyrene.

The acrylic resins refer to polymers containing acrylic monomers as structural units. Examples include styrene acrylic resins such as those which contain carboxy groups and are produced by copolymerizing aromatic vinyl monomer components and acrylic monomer components. Solvent-free, carboxy group-containing styrene acrylic resins are suitable among these.

The solvent-free, carboxy group-containing styrene acrylic resins may be (meth)acrylic resins (polymers) synthesized by high temperature continuous polymerization (high temperature continuous bulk polymerization as described in, for example, US Patent No. 4,414,370, JP S59-6207 A, JP H5-58005 B, JP H1-313522 A, US Patent No. 5,010,166, and annual research report TREND 2000 issued by Toagosei Co., Ltd., vol. 3, pp. 42-45, all of which are herein incorporated by reference) using no or minimal amounts of auxiliary raw materials such as polymerization initiators, chain transfer agents, and organic solvents. Herein, the term "(meth)acrylic" means methacrylic and acrylic.

Examples of the acrylic monomer components of the acrylic resins include (meth)acrylic acid and (meth)acrylic acid derivatives such as (meth)acrylic acid esters (e.g., alkyl esters, aryl esters, and aralkyl esters, such as 2-ethylhexyl acrylate), (meth)acrylamide, and (meth)acrylamide derivatives. Here, the term "(meth)acrylic acid" is a general term for acrylic acid and methacrylic acid.

Examples of the aromatic vinyl monomer components of the acrylic resins include aromatic vinyls such as styrene, α-methylstyrene, vinyltoluene, vinylnaphthalene, divinylbenzene, trivinylbenzene, and divinylnaphthalene.

In addition to the (meth)acrylic acid or (meth)acrylic acid derivatives and aromatic vinyls, other monomer components may also be used as the monomer components of the acrylic resins.

The plasticizers may be commercially available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

From the viewpoint of properties such as crack resistance and ozone resistance, the tread rubber composition preferably contains antioxidants.

Non-limiting examples of the antioxidants include naphthylamine antioxidants such as phenyl-α-naphthylamine; diphenylamine antioxidants such as octylated diphenylamine and 4,4'-bis(α,α'-dimethylbenzyl) diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl -4'-hydroxyphenyl)propionate]methane. Among these, p-phenylenediamine or quinoline antioxidants are preferred, with N-(1,3-dimethylbutyl)-N'-phenyl-p-phenylenediamine or polymerized 2,2,4-trimethyl-1,2-dihydroquinoline being more preferred. Usable commercial products are available from Seiko Chemical Co., Ltd., Sumitomo Chemical Co., Ltd., Ouchi Shinko Chemical Industrial Co., Ltd., Kawaguchi Chemical Industry Co., Ltd, Flexsys, etc.

The amount of antioxidants in the tread rubber composition per 100 parts by mass of the rubber component content is preferably 0.2 parts by mass or more, more preferably 2.0 parts by mass or more, still more preferably 3.0 parts by mass or more. The amount of antioxidants is preferably 7.0 parts by mass or less, more preferably 4.0 parts by mass or less.

The tread rubber composition preferably contains stearic acid.

The amount of stearic acid in the tread rubber composition per 100 parts by mass of the rubber component content is preferably 0.5 to 10 parts by mass, more preferably 2 to 4 parts by mass.

The stearic acid used may be a conventional one, e.g., available from NOF Corporation, Kao Corporation, FUJIFILM Wako Pure Chemical Corporation, or Chiba Fatty Acid Co., Ltd.

The tread rubber composition preferably contains zinc oxide. The amount of zinc oxide in the rubber composition per 100 parts by mass of the rubber component content is preferably 0.5 to 10 parts by mass, more preferably 2 to 6 parts by mass.

The zinc oxide used may be a conventional one, e.g., available from Mitsui Mining & Smelting Co., Ltd., Toho Zinc Co., Ltd., HakusuiTech Co., Ltd., Seido Chemical Industry Co., Ltd., or Sakai Chemical Industry Co., Ltd.

The tread rubber composition may contain waxes. The amount of waxes in the rubber composition per 100 parts by mass of the rubber component content is preferably 0.5 to 10 parts by mass, more preferably 2 to 5 parts by mass.

Any wax may be used, and examples include petroleum waxes, natural waxes, and synthetic waxes produced by purifying or chemically treating a plurality of waxes. These waxes may be used alone or in combination of two or more.

Examples of the petroleum waxes include paraffin waxes and microcrystalline waxes. The natural waxes may be any wax derived from non-petroleum resources, and examples include plant waxes such as candelilla wax, carnauba wax, Japan wax, rice wax, and jojoba wax; animal waxes such as beeswax, lanolin, and spermaceti; mineral waxes such as ozokerite, ceresin, and petrolatum; and purified products of these. Usable commercial products are available from Ouchi Shinko Chemical Industrial Co., Ltd., Nippon Seiro Co., Ltd., Seiko Chemical Co., Ltd., etc.

The tread rubber composition preferably contains sulfur in order to moderately crosslink the polymer chains to achieve good properties.

The tread rubber composition preferably has a sulfur content of 0.1 parts by mass or more, more preferably 1.0 parts by mass or more, still more preferably 1.5 parts by mass or more per 100 parts by mass of the rubber component content. The sulfur content is preferably 5.0 parts by mass or less, more preferably 3.0 parts by mass or less, still more preferably 2.0 parts by mass or less.

Examples of the sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. These may be used alone or in combination of two or more.

The tread rubber composition preferably contains vulcanization accelerators.

The amount of vulcanization accelerators (the total amount of vulcanization accelerators) in the tread rubber composition is not limited and may be freely determined according to the desired vulcanization speed and crosslink density. The amount of vulcanization accelerators per 100 parts by mass of the rubber component content is preferably 0.5 parts by mass or more, more preferably 3.0 parts by mass or more, still more preferably 4.5 parts by mass or more. The upper limit of the amount of vulcanization accelerators is preferably 8.0 parts by mass or less, more preferably 6.0 parts by mass or less, still more preferably 4.5 parts by mass or less. When the amount of vulcanization accelerators is within the range indicated above, the advantageous effect tends to be better achieved.

Any type of vulcanization accelerators may be used, including those generally used. Examples of the vulcanization accelerators include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combination of two or more. Sulfenamide or guanidine vulcanization accelerators are preferred among these.

The amount of sulfenamide vulcanization accelerators in the tread rubber composition per 100 parts by mass of the rubber component content is preferably 0.5 parts by mass or more, more preferably 1.5 parts by mass or more, still more preferably 2.0 parts by mass or more. The upper limit of the amount of sulfenamide vulcanization accelerators is preferably 5.0 parts by mass or less, more preferably 4.0 parts by mass or less, still more preferably 3.0 parts by mass or less. When the amount of sulfenamide vulcanization accelerators is within the range indicated above, the advantageous effect tends to be better achieved.

The amount of guanidine vulcanization accelerators in the tread rubber composition per 100 parts by mass of the rubber component content is preferably 0.5 parts by mass or more, more preferably 1.5 parts by mass or more, still more preferably 2.5 parts by mass or more. The upper limit of the amount of guanidine vulcanization accelerators is preferably 5.0 parts by mass or less, more preferably 4.5 parts by mass or less, still more preferably 4.0 parts by mass or less. When the amount of guanidine vulcanization accelerators is within the range indicated above, the advantageous effect tends to be better achieved.

The tread rubber composition can be produced by known methods, such as by kneading the above components using a rubber kneading machine such as an open roll mill or a Banbury mixer, followed by vulcanizing the kneaded mixture.

In particular, to better achieve the advantageous effect, the tread rubber composition is desirably produced by a production method including: a base kneading step of kneading rubber components, biomass silica, a silane coupling agent, and a basic substance; and a finish kneading step of kneading the kneaded mixture obtained in the base kneading step and a vulcanizing material added to the kneaded mixture.

In the production method, the rubber components, biomass silica, and silane coupling agent may be the same as those mentioned above.

Examples of the vulcanizing material include the above-listed examples of the sulfur and vulcanization accelerators.

The basic substance may be any substance which is basic.

Preferred examples of the basic substance include guanidines, because they are highly effective in promoting the reaction between the silane coupling agent and silica. Guanidines are substances that are also used as vulcanization accelerators. Specific examples thereof include 1,3-diphenylguanidine, 1,3-di-o-tolylguanidine, 1-o-tolylbiguanide, di-o-tolylguanidine salts of dicatechol borate, 1,3-di-o-cumenylguanidine, 1,3-di-o-biphenylguanidine, and 1,3-di-o-cumenyl-2-propionylguanidine. Of these, 1,3-diphenylguanidine, 1,3-di-o-tolylguanidine, or 1-o-tolylbiguanide is preferred, with 1,3-diphenylguanidine being more preferred.

In the base kneading step, the rubber components, biomass silica, silane coupling agent, and basic substance are added and kneaded. When the different silica is further used in addition to biomass silica, the different silica is desirably kneaded in the base kneading step. The kneading may be performed by any method, for example, using a known kneading machine such as a Banbury mixer or a kneader. The kneading time (kneading time of the entire base kneading step) is preferably 4 to 30 minutes, and the kneading temperature is preferably 130°C to 160°C.

The rubber components, silica (biomass silica and the different silica), silane coupling agent, and basic substance may be added all at once, or may be added in portions. They are preferably added all at once.

In the base kneading step, the method of adding biomass silica all at once can impart higher shear and increase the dispersibility of silica per hour as compared to the method of adding biomass silica in portions. When a large amount of hard materials are added, the viscosity may increase to high. To prevent this, a basic substance is added together therewith in the production method. The basic substance acts to make the pH of the system basic and thus promotes silanization, improving the dispersibility of silica and simultaneously reducing the viscosity. Thus, the production method can increase the dispersibility of silica and impart excellent abrasion resistance.

In the base kneading step, at least the rubber components, silica (biomass silica and the different silica), silane coupling agent, and basic substance are kneaded. Additional components such as carbon black and stearic acid may be kneaded therewith.

In the finish kneading step, the vulcanizing material is added to the kneaded mixture obtained in the base kneading step and they are kneaded. The kneading may be performed by any method, for example, using a known kneading machine such as an open roll mill. The kneading time is preferably 3 to 15 minutes, and the kneading temperature is preferably 40°C to 80°C.

In the finish kneading step, at least the kneaded mixture obtained in the base kneading step and the vulcanizing material (sulfur, vulcanization accelerators, etc.) are kneaded. Additional components such as zinc oxide, antioxidants, and oils may be kneaded therewith.

The kneaded mixture (unvulcanized rubber composition) obtained in the finish kneading step is extruded into the shape of a tread and molded and assembled with other tire components in a usual manner on a tire building machine to build an unvulcanized tire, which is then heated and pressurized in a vulcanizer. Thereby, a tire can be produced.

The tire may be, for example, a pneumatic tire or a non-pneumatic tire, preferably a pneumatic tire. In particular, the tire may suitably be used as summer tires and winter tires (e.g., studless winter tires, snow tires, studded tires). For example, the present tire may be used as a tire for passenger cars, large passenger cars, large SUVs, heavy duty vehicles such as trucks and buses, light trucks, or motorcycles, or as a racing tire (high performance tire).

<Tire>

The tire of the present invention includes a tread that satisfies the relationship (1). To better achieve the advantageous effect, the thickness T (mm) of the tread desirably satisfies the following relationship:

$$T \leq 12 \text{ mm.}$$

The thickness T is preferably 10 mm or less, more preferably 9 mm or less, still more preferably 8 mm or less, particularly preferably 7 mm or less. The lower limit of the thickness T is preferably 2 mm or more, more preferably 4 mm or more, still more preferably 5 mm or more. When the thickness T is within the range indicated above, the advantageous effect tends to be suitably achieved.

The reason is not exactly clear why the advantageous effect is remarkably obtained when the thickness T of the tread is not more than a predetermined value, particularly, 8 mm or less, but is believed to be that the tread having a smaller thickness is less likely to store heat generated during rolling, the high strength of the rubber is easily maintained, and the abrasion resistance thus can be further improved. For this reason, the abrasion resistance is presumably remarkably improved.

In the present invention, the thickness T of the tread refers to the thickness of the tread on the equator of the tire in the cross-section taken in the radial direction of the tire. The thickness of the tread on the equator of the tire is measured from the outermost surface of the tread on the equator of the tire along the equator of the tire. The thickness of the tread corresponds to the distance from the tread surface to an interface of another fiber material-containing reinforcing layer such as a belt layer or a carcass layer, the interface being on the side of the outermost surface of the tire, in a cross-section taken in the radial direction of the tire. When the tread has a groove on the equator, the thickness of the tread corresponds to the linear distance from the intersection of the equator of the tire and a straight line connecting the edges of the groove which are outermost in the radial direction of the tire.

Herein, unless otherwise specified, the dimension of the thickness T of the tread is measured with the bead of the tire met to the width of a normal rim. In the measurement, the tire is cut in the tire radial direction to prepare a sample, and the sample is fixed such that the bead ends of both sides of the sample meet the width of the normal rim.

The normal rim refers to a rim specified by the standard with which the tire complies. The normal rim is a "standard rim" in the JATMA standard, a "design rim" in the TRA standard, or a "measuring rim" in the ETRTO standard.

To better achieve the advantageous effect, in the tire of the present invention, the thickness T (mm) of the tread and the $\Delta G^*$ (MPa) (= |G*a (MPa) - G*b (MPa)|) of the tread (tread rubber composition) desirably satisfy the following relationship:

$$T \times \Delta G^* \leq 11.5.$$

The value of $T \times \Delta G^*$ (mm·MPa) is preferably 11.3 or less, more preferably 10.0 or less, still more preferably 8.0 or less, further preferably 7.0 or less, even further preferably 6.1 or less, particularly preferably 5.4 or less, most preferably 4.4 or less and may be 3.8 or less. The lower limit of the value of $T \times \Delta G^*$ is preferably 2.0 or more, more preferably 2.5 or more, still more preferably 3.0 or more. When the value of $T \times \Delta G^*$ is within the range indicated above, the advantageous effect tends to be suitably achieved.

The reason is not exactly clear why the advantageous effect is remarkably obtained when the value of $T \times \Delta G^*$ is not more than a predetermined value, particularly, 8.0 or less, but is believed to be that the tread having a small thickness and a small value of $\Delta G^*$ can prevent heat storage and achieve improved dispersibility, and can be conforming, and the abrasion resistance thus can be further improved. For this reason, the abrasion resistance is presumably remarkably improved.

To better achieve the advantageous effect, the tan $\delta$ of the tread (tread rubber composition) desirably satisfies the following relationship:

$$\tan \delta \leq 0.31$$

wherein the tan $\delta$ is a loss tangent measured under the conditions including a temperature of 30°C, an initial strain of 10%, a dynamic strain of 1%, a frequency of 10 Hz, and an extension mode.

The tan $\delta$ is preferably 0.29 or less, more preferably 0.20 or less, still more preferably 0.18 or less, particularly preferably 0.17 or less. The lower limit of the tan $\delta$ is preferably 0.10 or more, more preferably 0.12 or more, still more preferably 0.13 or more. When the tan $\delta$ is within the range indicated above, the advantageous effect tends to be suitably achieved.

The reason is not exactly clear why the advantageous effect is remarkably obtained when the tan $\delta$ is not more than a predetermined value, particularly, 0.20 or less, but is believed to be that the heat storage can be easily reduced by decreasing the tan $\delta$, and the abrasion resistance thus can be further improved. For this reason, the abrasion resistance is presumably remarkably improved.

Herein, the tan $\delta$ refers to the tan $\delta$ of a molded tire and corresponds to the tan $\delta$ of a vulcanized rubber composition. Specifically, the tan $\delta$ refers to the tan $\delta$ measured by the method described in Examples.

Herein, the term "tan $\delta$" refers to the loss tangent measured under conditions including a temperature of 30°C, an initial strain of 10%, a dynamic strain of 1%, a frequency of 10 Hz, and an extension mode. A measurement sample having a width of 4 mm, a length of 20 mm, and a thickness of 1 mm is taken from the produced tread, with the circumferential direction of the tire corresponding to the longitudinal direction of the sample.

The tan $\delta$ can be controlled by the types and amounts of chemicals (in particular, rubber components, fillers, plasticizers, sulfur, vulcanization accelerators, silane coupling agents) compounded into the tread rubber composition. For example, the tan $\delta$ tends to be increased by using a softening agent with low miscibility with the rubber components, using a non-modified polymer, increasing the amount of fillers, increasing the amount of oils as plasticizers, or reducing the amount of sulfur, vulcanization accelerators, or silane coupling agents.

To better achieve the advantageous effect, in the tire of the present invention, the thickness T (mm) of the tread and the tan $\delta$ of the tread (rubber composition for the tread) desirably satisfy the following relationship:

$$T \times \tan \delta \leq 3.1$$

wherein the tan $\delta$ is a loss tangent measured under the conditions including a temperature of 30°C, an initial strain of 10%, a dynamic strain of 1%, a frequency of 10 Hz, and an extension mode.

The value of T $\times$ tan $\delta$ (mm) is preferably 2.9 or less, more preferably 2.3 or less, still more preferably 2.0 or less, further preferably 1.8 or less, even further preferably 1.7 or less, particularly preferably 1.4 or less, most preferably 1.2 or less. The lower limit of the value of T $\times$ tan $\delta$ is preferably 0.3 or more, more preferably 0.5 or more, still more preferably 0.7 or more. When the value of T $\times$ tan $\delta$ is within the range indicated above, the advantageous effect tends to be suitably achieved.

In the tire of the present invention, to better achieve the advantageous effect, the tread has a circumferential groove having a groove depth D (mm) satisfying the following relationship:

$$3.0 \leq D \leq 9.0.$$

The lower limit of the depth D is preferably 3.5 mm or more, more preferably 4.0 mm or more, still more preferably 4.5 mm or more, particularly preferably 5.0 mm or more. The upper limit of the depth D is preferably 8.5 mm or less, more preferably 8.0 mm or less, still more preferably 7.5 mm or less, further preferably 6.0 mm or less. When the groove depth D is within the range indicated above, the advantageous effect tends to be better achieved.

Herein, the groove depth D of the circumferential groove is measured along the normal of a plane extended from the outermost tread surface forming the ground contact surface, and refers to the distance from the plane extended from the surface forming the ground contact surface to the deepest groove bottom, which is the largest among the groove depths of the circumferential grooves provided.

In the tire of the present invention, to better achieve the advantageous effect, the groove depth D (mm) of the circumferential groove formed in the tread and the $\Delta G^*$ (MPa) (= |G*a (MPa)-G*b (MPa)|) of the tread (tread rubber composition) preferably satisfy the following relationship:

$$D \times \Delta G^* \leq 6.0.$$

The value of D $\times$ $\Delta G^*$ (mm·MPa) is preferably 5.0 or less, more preferably 4.9 or less, still more preferably 4.5 or less, further preferably 4.4 or less, even further preferably 3.5 or less, still further preferably 3.3 or less, particularly preferably 2.7 or less. The lower limit of the value of D $\times$ $\Delta G^*$ is preferably 1.0 or more, more preferably 1.5 or more, still more preferably 2.0 or more. When the value of D $\times$ $\Delta G^*$ is within the range indicated above, the advantageous effect tends to be suitably achieved.

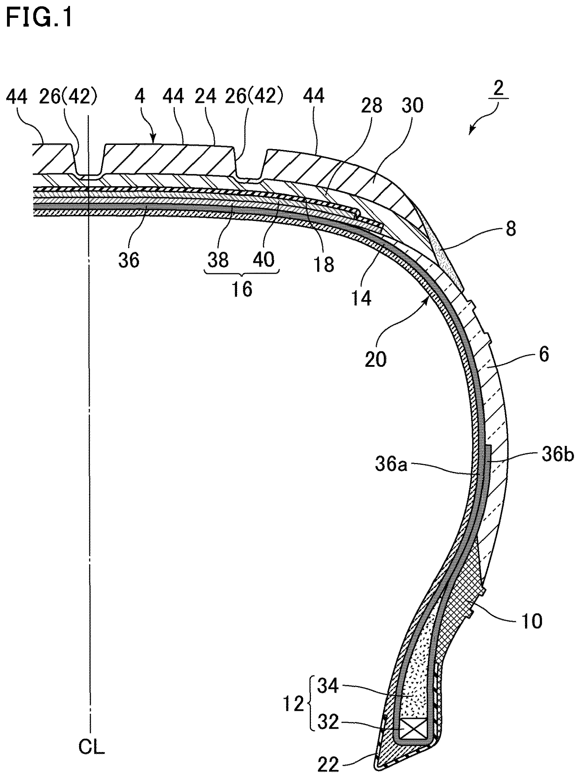

An example of the tire of the present invention including a tread including the tread rubber composition is described with reference to FIG. 1.

In FIG. 1, the vertical direction corresponds to the radial direction of a tire 2, the horizontal direction corresponds to the axial direction of the tire 2, and the direction perpendicular to the paper corresponds to the circumferential direction of the tire 2. A tread 4 includes a cap layer 30 and a base layer 28.

FIG. 1 shows an example of the two-layer tread 4 consisting of the cap layer 30 and the base layer 28, but the tread may be a single-layer tread or a tread with three or more layers.

In the tire 2, each sidewall 6 extends substantially inwardly in the radial direction from the end of the tread 4. The radially outer portion of the sidewall 6 is bonded to the tread 4. The radially inner portion of the sidewall 6 is bonded to a clinch 10. The sidewall 6 can prevent damages to a carcass 14. The end of the sidewall 6 may be bonded to the end of the tread 4 such that a radially outer end of the sidewall 6 covers a radially outer portion of the tread 4.

In FIG. 1, each wing 8 is located between the tread 4 and the sidewall 6. The wing 8 is bonded to each of the tread 4 and the sidewall 6.

Each clinch 10 is located substantially radially inward of the sidewall 6. The clinch 10 is located outward from a bead 12 and the carcass 14, as viewed in the axial direction.

Each bead 12 is located axially inward of the clinch 10. The bead 12 includes a core 32 and an apex 34 that radially outwardly extends from the core 32. The core 32 desirably has a ring shape and contains a wound non-stretchable wire. The apex 34 is radially outwardly tapered.

The carcass 14 includes a carcass ply 36. In the tire 2, the carcass 14 consists of one carcass ply 36 but may include two or more carcass plies 36.

In the present tire 2, the carcass ply 36 extends between the beads 12 on opposite sides along the tread 4 and the sidewalls 6. The carcass ply 36 is folded around each core 32 from the inside to the outside in the axial direction.

The thus folded carcass ply 36 is provided with a main portion 36a and a pair of folded portions 36b. Namely, the carcass ply 36 includes the main portion 36a and a pair of the folded portions 36b.

Though not shown, the carcass ply 36 is desirably formed of a large number of parallel cords and a topping rubber. The absolute value of the angle of each cord to the equator is suitably from 75° to 90°. In other words, such a carcass 14 preferably has a radial structure.

In FIG. 1, a belt layer 16 is located radially inward of the tread 4. The belt layer 16 is stacked on the carcass 14. The belt layer 16 reinforces the carcass 14. The belt layer 16 consists of an interior layer 38 and an exterior layer 40. As is clear from FIG. 1, the interior layer 38 is slightly wider in the axial direction than the exterior layer 40. In the tire 2, the axial width of the belt layer 16 is preferably at least 0.6 times but not more than 0.9 times the cross-sectional width of the tire 2.

The "cross-sectional width of tire" refers to the width of the tire mounted on a normal rim with an internal pressure equal to atmospheric pressure, as determined by excluding the patterns, letters, and the like on the sides of the tire from the linear distance between the sidewalls (the total width of the tire) including all the patterns, letters, and the like on the sides of the tire.

Though not shown, the interior layer 38 and the exterior layer 40 are each desirably formed of a large number of parallel cords and a topping rubber. In other words, the belt layer 16 contains a large number of parallel cords. Each cord is tilted relative to the equator. The absolute value of the tilt angle is generally at least 10° but not greater than 35°. The tilt direction of the cords in the interior layer 38 relative to the equator is opposite to the tilt direction of the cords in the exterior layer 40 relative to the equator.

The tread 4 of the tire 2 includes a tread rubber composition that satisfies the relationship (1) "|G*a - G*b| $\leq$ 1.20 MPa". The rubber composition also desirably satisfies the relationship "tan $\delta \leq$ 0.31".

In FIG. 1, a band 18 is located radially outward of the belt layer 16. The band 18 has a width in the axial direction that is equal to the width of the belt layer 16. The band 18 may be wider than the belt layer 16.

Though not shown, the band 18 desirably includes cords and a topping rubber. The cords are spirally wound. Such a band 18 has what is called a jointless structure. The cords extend substantially in the circumferential direction. The angle of the cords to the circumferential direction is 5° or smaller or even 2° or smaller. The belt layer 16 is constrained by the cords, so that the belt layer 16 is inhibited from lifting.

In FIG. 1, the belt layer 16 and the band 18 form a reinforcement layer. The reinforcement layer may be formed only of the belt layer 16.

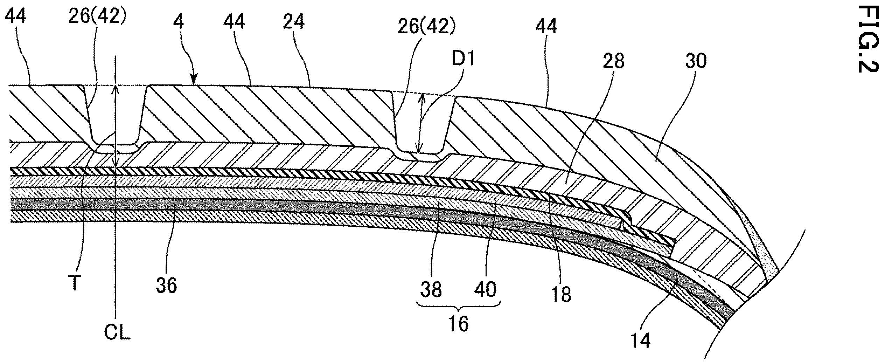

FIG. 2 is an enlarged view of the vicinity of the tread 4 in FIG. 1.

T in FIG. 2 is a thickness of the tread from the tread surface 24 on the equator of the tire in the cross-section taken in the radial direction of the tire. Here, in FIG. 2 illustrating the tire 2 having a groove 26 on the equator (line CL) of the tire, the tread surface 24 is a surface including a straight line connecting the edges of the groove 26 which are outermost in the radial direction of the tire. Also, T is measured along the normal to the tread surface 24 on the equator of the tire and is the distance from the tread surface 24 to the interface of the band 18, on the side of the outermost surface of the tire.

In the tire 2, the thickness T of the tread 4 and $\Delta$G* and tan $\delta$ of the tread desirably satisfy the relationships "T $\leq$ 12 mm", "T $\times$ $\Delta$G* $\leq$ 11.5", and "T $\times$ tan $\delta \leq$ 3.1".

An inner liner 20 is located inward of the carcass 14. The inner liner 20 is bonded to the inner surface of the carcass 14. The base material rubber of the inner liner 20 is typically butyl rubber or halogenated butyl rubber. The inner liner 20 maintains the internal pressure of the tire 2.

Each chafer 22 is located near the bead 12. In the present embodiment, the chafer 22 desirably includes a fabric and a rubber impregnated in the fabric. The chafer 22 may be integrated with the clinch 10.

In the present tire 2, the grooves 26 of the tread 4 include main grooves 42. As shown in FIG. 1, the tread 4 has a plurality of, specifically three, main grooves 42 engraved thereon. The main grooves 42 are provided at intervals in the axial direction. Four ribs 44 extending in the circumferential direction are defined by the three main grooves 42 engraved on the present tread 4. In other words, each main groove 42 is between one rib 44 and another rib 44.

The main grooves 42 extend in the circumferential direction. The main grooves 42 are continuous in the circumferential direction without interruption. For example, the main grooves 42 promote draining of water present between the road surface and the tire 2 in rainy weather. Thus, the tire 2 can sufficiently contact the road surface even when the road surface is wet.

D1 in FIG. 2 indicates the groove depth of the main groove 42 formed in the circumferential direction in the tread 4. The groove depth D1 and the $\Delta$G* of the tread desirably satisfy the relationships "3.0 $\leq$ D1 $\leq$ 9.0" and "D1 $\times$ $\Delta$G* $\leq$ 6.0".

EXAMPLES

The following describes preferred examples to implement, but the scope of the present invention is not limited to the examples.

The chemicals used in the examples and comparative examples are listed below.

SBR 1: HPR850 available from JSR Corporation (styrene content: 27.5% by mass, vinyl bond content: 59.0% by mass)

SBR 2: modified SBR synthesized in Production Example 1 below (styrene content: 35% by mass, vinyl content: 45% by mass, Mw: 750,000)

BR: BR730 (JSR Corporation, cis content: 95% by mass)

Carbon black: SHOBLACK N220 ($N_2SA$: 114 $m^2/g$) available from Cabot Japan K.K.

Silica 1: Ultrasil VN3 ($N_2SA$: 175 $m^2/g$) available from Evonik Degussa

Silica 2: K160 (rice husk silica, $N_2SA$: 154 $m^2/g$, CTAB: 152 $m^2/g$) available from Wilmar

Silane coupling agent: Si266 (bis(3-triethoxysilylpropyl)disulfide) available from Evonik Degussa

Stearic acid: TSUBAKI available from NOF Corporation

Zinc oxide: zinc oxide #2 available from Mitsui Mining & Smelting Co., Ltd.

Wax: SUNNOC N available from Ouchi Shinko Chemical Industrial Co., Ltd.

Antioxidant 1: NOCRAC 6C (N-phenyl-N'-(1,3-dimethylbutyl)-p-phenylenediamine) available from Ouchi Shinko Chemical Industrial Co., Ltd.

Antioxidant 2: ANTAGE RD (poly(2,2,4-trimethyl-1,2-dihydroquinoline)) available from Kawaguchi Chemical Industry Company, Limited

Oil: DIANA PROCESS AH-24 available from Idemitsu Kosan Co., Ltd.

Sulfur: powdered sulfur available from Tsurumi Chemical Industry Co., Ltd.

Vulcanization accelerator 1: NOCCELER NS (N-tert-butyl-2-benzothiazolylsulfenamide) available from Ouchi Shinko Chemical Industrial Co., Ltd.

Vulcanization accelerator 2: NOCCELER D (1,3-diphenylguanidine) available from Ouchi Shinko Chemical Industrial Co., Ltd.

(Production Example 1)

Two autoclave reactors each having an inner volume of 10 liters and equipped with an inlet at the bottom, an outlet at the head, a stirrer, and a jacket were connected in series. Butadiene, styrene, and cyclohexane were mixed at a predetermined ratio. The solution mixture was allowed to pass through a dehydration column filled with activated alumina. The resulting solution was combined with n-butyllithium in a static mixer to remove impurities. The solution mixture was continuously fed from the bottom of the first reactor, and 2,2-bis(2-oxolanyl)propane as a polar substance and n-butyllithium as a polymerization initiator were each continuously fed from the bottom of the first reactor at a predetermined rate. The temperature inside the reactor was maintained at 95°C. The polymer solution was continuously taken out from the head of the reactor and fed to the second reactor. While the temperature of the second reactor was maintained at 95°C, a mixture of tetraglycidyl-1,3-bisaminomethylcyclohexane (monomer) and an oligomer component thereof as a modifier (hereinafter, referred to as "modifier A") was continuously added as a 1000-fold dilution in cyclohexane at a predetermined rate to perform a modification reaction. The resulting polymer solution was continuously taken out from the reactor and continuously mixed with antioxidants in a static mixer. Thereafter, the solvent was removed to obtain SBR 2.

<Production of test tire>

(Base kneading step)

The materials listed in Table 1 for "Base kneading" are kneaded using a 1.7 L Banbury mixer to obtain a kneaded mixture. The materials in Table 1 are added in the order of the group of "X-1" and the group of "X-2", and kneaded. The kneading temperature and kneading time for the groups are as follows.

X-1 kneading temperature: 150°C, kneading time: five minutes
X-2 kneading temperature: 150°C, kneading time: five minutes

(Finish kneading step)

The materials listed in "Finish kneading" in Table 1 are added to the kneaded mixture obtained in the base kneading step, and they are kneaded using an open roll mill at 70°C for eight minutes to obtain an unvulcanized rubber composition.

(Vulcanization step)

The unvulcanized rubber composition obtained in the finish kneading step is formed into the shape of a tread and assembled with other tire components on a tire building machine to build an unvulcanized tire. The unvulcanized tire is press-vulcanized at 170°C for 20 minutes to prepare a test tire (specifications: Table 1).

Simulations of the production of test tires from the compositions different in formulation as shown in the table are performed and evaluated by the following methods. The results of the calculations are shown in the table.

Comparative Example 3 is used as a reference comparative example.

<Measurement of complex modulus of elasticity G*>

A sample having a size of a diameter of 10 mm and a thickness of 2 mm is taken from the tread of the test tire, with the thickness direction corresponding to the tire radial direction. The complex moduli of elasticity G*a and G*b of the sample are measured using a rheometer ARES 2G available from TA Instruments under the conditions including a temperature of 30°C, a frequency of 10 Hz, and a dynamic strain amplitude of 0.1% or 20% (shear deformation mode).

<Measurement of tan $\delta$>

A sample having a width of 4 mm, a length of 20 mm, and a thickness of 1 mm is taken from the tread of the test tire, with the circumferential direction of the tire corresponding to the longitudinal direction of the sample. The loss tangent tan $\delta$ of the sample is measured using EPLEXOR available from GABO under the conditions including a temperature of 30°C, an initial strain of 10%, a dynamic strain of 1%, a frequency of 10 Hz, and an extension mode.

<Abrasion resistance>

Each set of test tires is mounted on a front-engine, front-wheel-drive car made in Japan, and a weight of 400 kg is loaded thereon. After running 10000 km, the groove depth in the tread is measured. The distance at which the tire groove depth decreased by 1 mm is calculated. The results are expressed as an index using the equation below. A higher index indicates better abrasion resistance.

```
      (Abrasion resistance index) = (Distance at which
  groove depth of each formulation decreased by 1
  mm)/(Distance at which tire groove depth of standard
  comparative example decreased by 1 mm) × 100
```

[Table 1]

| | | | Example 1 | Example 2 | Example 3 | Example 4 | Example 5 | Example 6 | Example 7 | Example 8 | Comparative Example 1 | Comparative Example 2 | Comparative Example 3 | Comparative Example 4 |
|---|---|---|---|---|---|---|---|---|---|---|---|---|---|---|
| Formulation (parts by mass) | Base kneading | SBR 1 | 25 | 25 | 25 | 25 | 25 | 25 | 25 | 25 | 25 | 25 | 25 | 25 |
| | | SBR 2 | 60 | 60 | 60 | 60 | 60 | 60 | 60 | 60 | 60 | 60 | 60 | 60 |
| | | BR | 15 | 15 | 15 | 15 | 15 | 15 | 15 | 15 | 15 | 15 | 15 | 15 |
| | | Carbon black | 5 | 5 | 5 | 5 | 5 | 5 | 5 | 5 | 5 | 5 | 5 | 5 |
| | | Silica 1 | 0 | 0 | 0 | 0 | 0 | 0 | 0 | 0 | 80 | 100 | 100 | 0 |
| | | Silica 2 | 100 | 100 | 80 | 80 | 100 | 100 | 80 | 80 | 0 | 0 | 0 | 80 |
| | | Silane coupling agent | 8 | 8 | 8 | 8 | 8 | 8 | 8 | 8 | 8 | 8 | 8 | 8 |
| | | Stearic acid | 2 | 2 | 2 | 2 | 2 | 2 | 2 | 2 | 2 | 2 | 2 | 2 |
| | | Zinc oxide | 2 | 2 | 2 | 2 | 2 | 2 | 2 | 2 | 2 | 2 | 2 | 2 |
| | | Wax | 2 | 2 | 2 | 2 | 2 | 2 | 2 | 2 | 2 | 2 | 2 | 2 |
| | | Antioxidant 1 | 2 | 2 | 2 | 2 | 2 | 2 | 2 | 2 | 2 | 2 | 2 | 2 |
| | | Antioxidant 2 | 1 | 1 | 1 | 1 | 1 | 1 | 1 | 1 | 1 | 1 | 1 | 1 |
| | | Oil | 5 | 5 | 5 | 5 | 5 | 5 | 5 | 5 | 5 | 5 | 5 | 5 |
| | X-1 | Vulcanization accelerator 2 | 0 | 1.5 | 0 | 1.5 | 1.5 | 1.5 | 1.5 | 1.5 | 0 | 0 | 1.5 | 0 |
| | X-2 | Silica 1 | 0 | 0 | 0 | 0 | 0 | 0 | 0 | 0 | 20 | 0 | 0 | 0 |
| | | Silica 2 | 0 | 0 | 0 | 0 | 0 | 0 | 0 | 0 | 0 | 0 | 0 | 20 |
| | Finish kneading | Sulfur | 1.5 | 1.5 | 1.5 | 1.5 | 1.5 | 1.5 | 1.5 | 1.5 | 1.5 | 1.5 | 1.5 | 1.5 |
| | | Vulcanization accelerator 1 | 2 | 2 | 2 | 2 | 2 | 2 | 2 | 2 | 2 | 2 | 2 | 2 |
| | | Vulcanization accelerator 2 | 2.5 | 1 | 2.5 | 1 | 1 | 1 | 1 | 1 | 2.5 | 2.5 | 1 | 2.5 |
| Properties and Evaluation | | G*a (MPa) | 2.73 | 2.60 | 2.11 | 2.04 | 2.60 | 2.60 | 2.04 | 2.04 | 2.90 | 2.78 | 2.43 | 2.75 |
| | | G*b (MPa) | 1.60 | 1.60 | 1.50 | 1.50 | 1.60 | 1.60 | 1.50 | 1.50 | 1.80 | 1.70 | 1.40 | 1.50 |
| | | ΔG* (MPa) | 1.13 | 1.00 | 0.61 | 0.54 | 1.00 | 1.00 | 0.54 | 0.54 | 1.10 | 1.08 | 1.03 | 1.25 |
| | | Thickness T (mm) of tread | 10 | 10 | 10 | 10 | 8 | 7 | 8 | 7 | 10 | 10 | 10 | 10 |
| | | tan δ of tread | 0.31 | 0.29 | 0.18 | 0.17 | 0.29 | 0.29 | 0.17 | 0.17 | 0.33 | 0.33 | 0.30 | 0.34 |
| | | T × ΔG* | 11.3 | 10.0 | 6.1 | 5.4 | 8.0 | 7.0 | 4.4 | 3.8 | 11.0 | 10.8 | 10.3 | 12.5 |
| | | T × tan δ | 3.1 | 2.9 | 1.8 | 1.7 | 2.3 | 2.0 | 1.4 | 1.2 | 3.3 | 3.3 | 3.0 | 3.4 |
| | | Groove depth D (mm) of tread | 8.0 | 8.0 | 8.0 | 8.0 | 6.0 | 5.0 | 6.0 | 5.0 | 8.0 | 8.0 | 8.0 | 8.0 |
| | | D × ΔG* | 9.0 | 8.0 | 4.9 | 4.4 | 6.0 | 5.0 | 3.3 | 2.7 | 8.8 | 8.6 | 8.3 | 10.0 |
| | | Abrasion resistance | 105 | 110 | 117 | 123 | 115 | 120 | 128 | 133 | 95 | 87 | 100 | 95 |

The present invention (1) relates to a tire including a tread, the tread including biomass silica and having a difference ($\Delta$G*) between a complex modulus of elasticity G*a (MPa) at 0.1% shear deformation (frequency 10 Hz) at 30°C and a complex modulus of elasticity G*b (MPa) at 20% shear deformation (frequency 10 Hz) at 30°C, the difference ($\Delta$G*) satisfying the following relationship (1):

$$(1) \quad |G*a - G*b| \leq 1.20 \text{ MPa}.$$

The present invention (2) relates to the tire according to the present invention (1), wherein the tread has a thickness T (mm) satisfying the following relationship:

$$T \leq 8 \text{ mm}.$$

The present invention (3) relates to the tire according to the present invention (1) or (2), wherein the thickness T (mm) of the tread and the $\Delta$G* (MPa) of the tread satisfy the following relationship:

$$T \times \Delta G* \leq 8.0.$$

The present invention (4) relates to the tire according to any one of the present inventions (1) to (3), wherein the tread has tan $\delta$ satisfying the following relationship:

$$\tan \delta \leq 0.20$$

wherein the tan $\delta$ is a loss tangent measured under the conditions including a temperature of 30°C, an initial strain of 10%, a dynamic strain of 1%, a frequency of 10 Hz, and an extension mode.

The present invention (5) relates to the tire according to any one of the present inventions (1) to (4), wherein the thickness T (mm) of the tread and the tan $\delta$ of the tread satisfy the following relationship:

$$T \times \tan \delta \leq 2.0$$

wherein the tan $\delta$ is a loss tangent measured under the conditions including a temperature of 30°C, an initial strain of 10%, a dynamic strain of 1%, a frequency of 10 Hz, and an extension mode.

The present invention (6) relates to the tire according to any one of the present inventions (1) to (5), wherein the tread has a circumferential groove having a groove depth D (mm) satisfying the following relationship:

$$3.0 \leq D \leq 9.0.$$

The present invention (7) relates to the tire according to any one of the present inventions (1) to (6), wherein the groove depth D (mm) of the circumferential groove of the tread and the $\Delta$G* (MPa) of the tread satisfy the following relationship:

$$D \times \Delta G* \leq 6.0.$$

The present invention (8) relates to the tire according to any one of the present inventions (1) to (7), wherein the tread includes a tread rubber composition containing at least one rubber component and biomass silica, the at least one rubber component containing at least one styrene-butadiene rubber in an amount of 50 to 95% by mass based on 100% by mass of the rubber component content.

The present invention (9) relates to the tire according to any one of the present inventions (1) to (8), wherein the tread rubber composition included in the tread contains at least one rubber component and biomass silica, an amount of the biomass silica based on 100 parts by mass of the rubber component content being 40 to 160 parts by mass.

The present invention (10) relates to the tire according to any one of the present inventions (1) to (9), wherein the tread rubber composition included in the tread contains at least one rubber component, biomass silica, and a guanidine vulcanization accelerator.

REFERENCE SIGNS LIST

| | |
|---|---|
| 2 | pneumatic tire |
| 4 | tread |
| 6 | sidewall |
| 8 | wing |
| 10 | clinch |
| 12 | bead |
| 14 | carcass |
| 16 | belt layer |
| 18 | band |
| 20 | inner liner |
| 22 | chafer |
| 24 | tread surface |
| 26 | groove |
| 28 | base layer |
| 30 | cap layer |
| 32 | core |
| 34 | apex |
| 36 | carcass ply |
| 36a | main portion |
| 36b | folded portion |
| 38 | interior layer |
| 40 | exterior layer |
| 42 | main groove |
| 44 | rib |
| CL | equator of tire 2 |
| T | thickness of tread at predetermined point on tread surface 24 |
| D1 | groove depth of main groove 42 formed in circumferential direction in tread 4 |

Provided is a tire having an excellent abrasion resistance under high loads. The present invention relates to a tire including a tread, the tread including biomass silica and having a difference ($\Delta G^*$) between a complex modulus of elasticity G*a (MPa) at 0.1% shear deformation (frequency 10 Hz) at 30°C and a complex modulus of elasticity G*b (MPa) at 20% shear deformation (frequency 10 Hz) at 30°C, the difference ($\Delta G^*$) satisfying the following relationship (1):

$$(1) \quad |G^*a - G^*b| \leq 1.20 \text{ MPa.}$$

**Claims**

1. A tire comprising a tread, the tread including biomass silica and having a difference ($\Delta G^*$) between a complex modulus of elasticity G*a (MPa) at 0.1% shear deformation (frequency 10 Hz) at 30°C and a complex modulus of elasticity G*b (MPa) at 20% shear deformation (frequency 10 Hz) at 30°C, the difference ($\Delta G^*$) satisfying the following relationship (1):

$$(1) \quad |G^*a - G^*b| \leq 1.20 \text{ MPa.}$$

2. The tire according to claim 1,
wherein the tread has a thickness T (mm) satisfying the following relationship:

$$T \leq 8 \text{ mm.}$$

3.  The tire according to claim 1 or 2,
    wherein the thickness T (mm) of the tread and the ΔG* (MPa) of the tread satisfy the following relationship:

$$\mathtt{T \times \Delta G* \leq 8.0.}$$

4.  The tire according to any one of claims 1 to 3,
    wherein the tread has tan δ satisfying the following relationship:

$$\mathtt{tan\ \delta \leq 0.20}$$

    wherein the tan δ is a loss tangent measured under the conditions including a temperature of 30°C, an initial strain of 10%, a dynamic strain of 1%, a frequency of 10 Hz, and an extension mode.

5.  The tire according to any one of claims 1 to 4,
    wherein the thickness T (mm) of the tread and the tan δ of the tread satisfy the following relationship:

$$\mathtt{T \times tan\ \delta \leq 2.0}$$

    wherein the tan δ is a loss tangent measured under the conditions including a temperature of 30°C, an initial strain of 10%, a dynamic strain of 1%, a frequency of 10 Hz, and an extension mode.

6.  The tire according to any one of claims 1 to 5,
    wherein the tread has a circumferential groove having a groove depth D (mm) satisfying the following relationship:

$$\mathtt{3.0 \leq D \leq 9.0.}$$

7.  The tire according to any one of claims 1 to 6,
    wherein the groove depth D (mm) of the circumferential groove of the tread and the ΔG* (MPa) of the tread satisfy the following relationship:

$$\mathtt{D \times \Delta G* \leq 6.0.}$$

# FIG.1

FIG.2

Europäisches
Patentamt

European
Patent Office

Office européen
des brevets

# EUROPEAN SEARCH REPORT

Application Number

EP 23 15 4849

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2016/083495 A1 (STEINHAUSER NORBERT [DE] ET AL) 24 March 2016 (2016-03-24) <br> * paragraph [0001] - paragraph [0002] * <br> * paragraph [0081] * <br> * tables 2, 3 * <br> * paragraph [0093] - paragraph [0094] * <br> * claim 1 * <br> ----- | 1-7 | INV. <br> B60C1/00 <br> C08C19/22 <br> C08F236/10 <br> C08L15/00 |
| X | KR 2021 0144437 A (HANKOOK TIRE & TECHNOLOGY CO LTD) 30 November 2021 (2021-11-30) <br> * paragraph [0001] * <br> * paragraph [0004] - paragraph [0006] * <br> * paragraph [0012] * <br> * paragraph [0024] * <br> * tables 1-2 * <br> ----- | 1-7 | |
| | | | TECHNICAL FIELDS SEARCHED (IPC) <br><br> B60C <br> C08C <br> C08F <br> C08L |

The present search report has been drawn up for all claims

| Place of search | Date of completion of the search | Examiner |
|---|---|---|
| Munich | 21 June 2023 | Laïb, Samia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 4849

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2023

| Patent document cited in search report | | Publication date | Patent family member(s) | | Publication date |
|---|---|---|---|---|---|
| US 2016083495 | A1 | 24-03-2016 | BR 112015026744 | A2 | 25-07-2017 |
| | | | CN 105143315 | A | 09-12-2015 |
| | | | EP 2796485 | A1 | 29-10-2014 |
| | | | EP 2989145 | A1 | 02-03-2016 |
| | | | ES 2758749 | T3 | 06-05-2020 |
| | | | HK 1222188 | A1 | 23-06-2017 |
| | | | HU E046634 | T2 | 30-03-2020 |
| | | | JP 6212202 | B2 | 11-10-2017 |
| | | | JP 2016518493 | A | 23-06-2016 |
| | | | KR 20160004336 | A | 12-01-2016 |
| | | | MX 366116 | B | 27-06-2019 |
| | | | PL 2989145 | T3 | 30-04-2020 |
| | | | RU 2015150061 | A | 29-05-2017 |
| | | | SG 11201508456P | A | 27-11-2015 |
| | | | TW 201504321 | A | 01-02-2015 |
| | | | US 2016083495 | A1 | 24-03-2016 |
| | | | WO 2014173707 | A1 | 30-10-2014 |
| KR 20210144437 | A | 30-11-2021 | NONE | | |

EPO FORM P0459

For more details about this annex : see Official Journal of the European Patent Office, No. 12/82

## REFERENCES CITED IN THE DESCRIPTION

**Patent documents cited in the description**

- JP 2021518328 A
- US 4414370 A
- JP S596207 A
- JP H558005 B
- JP H1313522 A
- US 5010166 A

**Non-patent literature cited in the description**

- TREND. Toagosei Co., Ltd, 2000, vol. 3, 42-45